# EUROPEAN PATENT SPECIFICATION

(11) **EP 1 922 175 B1**
(45) Date of publication and mention of the grant of the patent: **04.09.2019**
(21) Application number: 06750366.4
(22) Date of filing: 12.04.2006
(51) Int. Cl.: B23K 35/26, B23K 35/30, B23K 35/02, B32B 15/01, C03C 17/36, C22C 13/00, C22C 28/00, C22C 30/04, C03C 27/04

(54) **SOLDER COMPOSITION**
LÖTZUSAMMENSETZUNG
COMPOSITION DE BRASURE

(30) Priority: 12.08.2005 US 202640; 22.02.2006 US 359864; 22.02.2006 US 359876
(43) Date of publication of application: 21.05.2008
(73) Proprietor: Aptiv Technologies Limited, St. Michael (BB)
(72) Inventor: PEREIRA, John, Rehoboth, Massachusetts 02769 (US)
(74) Representative: Westphal, Mussgnug & Partner Patentanwälte mbB
(86) International application number: PCT/US2006/014305
(87) International publication number: WO 2007/021326

(56) References cited:
- WO-A-00/58051
- JP-A- 61 014 096
- US-A- 5 082 162
- ANDREEVA ET AL: "Solder for soldering components of electrovacuum devices" STN CHEMICAL ABSTRACTS, vol. 91, no. 14, 1 October 1979 (1979-10-01), XP002143220
- ANDREEVA ET AL: "Metal for soldering electrovacuum apparatus" STN CHEMICAL ABSTRACTS, vol. 90, no. 4, 22 January 1979 (1979-01-22), XP002143221

## Description

### BACKGROUND

Electrical connectors are typically used for making electrical connections to devices such as antennas and defrosters, which are incorporated on or embedded within automotive glass. The electrical connectors are commonly soldered to the glass with a solder that contains lead. Due to environmental concerns, most industries are currently using or planning to use low or non-lead solders for various soldering applications. A common non-lead solder employed in some industries, contains a high tin (Sn) content, for example 95% tin. Documents WO00/58051A and ANREEVA ET AL: "Solder for soldering components of electro vacuum devices", discloses solder compositions know in the art. However, there are difficulties encountered when soldering devices to automotive glass that are not present in other fields. Automotive glass tends to be brittle, and the common high tin, non-lead solders that are suitable for use in other applications can typically cause cracking of the automotive glass. Although materials such as ceramics and silicon might appear to be similar in some respects to automotive glass, some solders that are suitable for soldering to ceramic or silicon devices are not suitable for soldering to automotive glass.

### SUMMARY

The present invention provides a solder article that can be suitable for soldering to automotive glass and can be lead free.

The solder article can be a multilayer solder article that includes a layer of a first non-lead solder for bonding to an electrically conductive material. A layer of a second non-lead solder can be on the layer of the first solder. The second solder can have a lower melting temperature than the first solder. The melting temperature of the second solder can be below about 310□F.

In particular embodiments, the second solder can be suitable for soldering to automotive glass and can be a softer material than the first solder. The first solder can have a melting temperature of about 465□F and the second solder can have a melting temperature of about 250□F. The first solder can be a tin and silver composition having about 70% or greater tin, and the second solder can have an indium, tin, silver and copper composition of at least about 40% indium and less than about 55% tin. In some embodiments, the second solder can have a composition of about 50% or more indium, a maximum of about 30% tin, about 3% to 5% silver and about .25% to .75% copper. In one embodiment, the first solder can be about 95% tin and about 5% silver, and the second solder can be about 65% indium, about 30% tin, about 4.5% silver and about .5% copper. The layers of the first and second solders can have a combined thickness ranging between about .007 to .040 inches, and in some embodiments, can be about .013 to .015 inches. The layer of the first solder can range between about .005 to .010 inches thick. The layer of the second solder can range between about .001 to .008 inches thick, and in some embodiments, can range between about .005 to .008 inches thick. The layers of the first and second solders can be bonded on a base substrate formed of electrically conductive material. The base substrate can be made of sheet metal such as a band of copper. The multilayer solder article can be an electrical device such as an electrical connector.

An electrical device in the present invention can include a base formed of electrically conductive material. A layer of a first non-lead solder can be on the base. A layer of a second non-lead solder can be on the layer of the first solder. The second solder can have a lower melting temperature than the first solder. The melting temperature of the second solder can be below about 310° F.

The present invention additionally provides a method of making a multilayer solder article including providing a layer of a first non-lead solder. A layer of a second non-lead solder can be bonded against the layer of the first solder by cold rolling the layers of the first and second solders together between a pair of rollers. The layer of the second solder can have a lower melting temperature than the layer of the first solder. The melting temperature of the second solder layer can be below about 310□F.

In particular embodiments, the layer of the first solder can be formed on a surface of a base substrate formed from a sheet of electrically conductive material. A sheet of the first solder can be applied on the surface of the base substrate and melted on the base substrate with a heat source. The first solder can be a band which is applied on a base substrate band. Flux can be applied between the first solder and the base substrate. The first solder can be trimmed to a desired dimension on the base substrate. A band of the second solder can be cold rolled on the first solder. Cold rolling of the second solder against the first solder can be performed without requiring pre-treatment of mating surfaces of the first and second solders. The combined thickness of the layers of the first and second solders can be reduced by about 30% to 50% during the cold rolling. The layers of solder can be heated with a heat source after cold rolling. The first and second solders can be aligned with each other before cold rolling within a guide device, which can be stationary.

The second solder can be selected to be softer than the first solder. The first solder can have a melting temperature of about 465□F and the second solder can have a melting temperature of about 250□F. The first solder can have a tin and solder composition having about 70% or greater tin, and the second solder can have an indium, tin, silver and copper composition of at least about 40% indium and less than about 55% tin. In some embodiments, the second solder can have a composition of 50% or more indium, a maximum of about 30% tin, about 3% to 5% silver and about .25% to .75% copper. In one embodiment, the first solder can be about 95% tin and about 5% silver, and the second solder can be about 65% indium, about 30% tin, about 4.5% silver and about .5% copper.

The base substrate can be formed from sheet metal such as a band of copper. The multilayer solder article can be further formed into an electrical device such as an electrical connector. The layers of the first and second solders can have a combined thickness ranging between about .007 to .040 inches, and in some embodiments, can be about .013 to .015 inches. The layer of the first solder can range between about .005 to .010 inches thick. The layer of the second solder can range between about .001 to .008 inches thick, and in some embodiments can range between about .005 to .008 inches thick.

The present invention further provides a method of soldering an electrical device to automotive glass including providing a layer of a first non-lead solder on the electrical device. A layer of a second non-lead solder is provided on the layer of the first solder. The second solder can have a lower melting temperature than the first solder. The melting temperature of the second solder can be below about 310□F. The electrical device can be oriented relative to the automotive glass to position the layer of the second solder against the glass. A preselected amount of heat can be applied to the second solder for melting the layer of the second solder without substantively melting the layer of the first solder for soldering the electrical device to the automotive glass.

The layer of the first solder can be provided on a metal base of the electrical device which can be formed of copper. The first and second solders can have similar configurations, dimensions, compositions and properties as those previously discussed above.

The present invention also provides an electrical device including a base formed of electrically conductive material, and a layer of a first non-lead solder on the base. A layer of a second non-lead solder is on the layer of the first solder. The second solder can have a composition including tin, indium, silver and copper. The second solder has a lower melting temperature than the first solder.

In particular embodiments, the second solder can have a melting temperature below about 360° F. In some embodiments, the second solder can have a melting temperature below about 315° F, and in other embodiments, the second solder can have a melting temperature below about 310° F. The second solder can have a composition including at least about 50% tin, at least about 10% indium, about 1% to 10% silver, and about .25% to .75% copper. In one embodiment, the second solder can include about 60% tin, about 35% indium, about 4.5% silver, and about .5% copper. The second solder can have a melting temperature of about 300° F. The first solder can include tin and silver with about 70% or greater tin. The first solder can include about 95% tin and about 5% silver. The first solder can have a melting temperature of about 465° F. The base can be made of sheet metal such as copper. The electrical device can be an electrical connector.

The present invention additionally provides a multilayer solder article including a layer of a first non-lead solder for bonding to an electrically conductive material, and a layer of a second non-lead solder on the layer of the first solder. The second solder can have a composition including tin, indium, silver and copper. The second solder can have a lower melting temperature than the first solder and can be suitable for soldering to automotive glass.

In particular embodiments, the first and second solders can be as described herein. In addition, the article can further include a base substrate formed of an electrically conductive material on which the layers of the first and second solders are bonded. The base substrate can be made of sheet metal such as a band of copper.

The present invention can also provide a method of making a multilayer solder article including providing a layer of a first non-lead solder, and bonding a layer of a second non-lead solder against the layer of the first solder by cold rolling the layers of the first and second solders together between a pair of rollers. The second solder can have a composition including tin, indium, silver and copper. The layer of the second solder has a lower melting temperature than the layer of the first solder.

The present invention can further provide a method of soldering an electrical device to automotive glass including providing a layer of a first non-lead solder on the electrical device. A layer of a second non-lead solder is provided on the layer of the first solder. The second solder can have a composition including tin, indium, silver and copper. The second solder has a lower melting temperature than the first solder. The electrical device can be oriented relative to the automotive glass to position the layer of the second solder against the glass. A preselected amount of heat can be applied to the second solder for melting the layer of the second solder without substantially melting the layer of the first solder for soldering the electrical device to the automotive glass.

In particular embodiments, the first and second solders can be as described herein.

The present invention can also provide a solder composition having a mixture of elements including tin, indium, silver, and bismuth, and can include about 30% to 85% tin and about 15% to 65% indium.

In particular embodiments, the solder composition can further include copper. The composition can include about 1% to 10% silver, about .25% to 6% bismuth, and about .25% to .75% copper. In some embodiments, the composition can include about 1% to 6% silver, about .25% to 4% bismuth, and about .25% to .75% copper. The composition can include about 50% to 83% tin, and about 15% to 45% indium. The composition can have a solidus temperature below about 315□F.

The present invention can also provide a solder composition having a mixture of elements including tin, indium, silver, and bismuth, and can include about 30% to 85% tin, about 13% to 65% indium, and about .25% to 4% bismuth.

In particular embodiments, the composition can include copper. The composition can include about 1% to 10% silver, and about .25% to .75% copper. In some embodiments, the composition can include about 1% to 6% silver, about .25% to 4% bismuth, and about .25% to .75% copper. The composition can include about 50% to 83% tin, and about 13% to 45% indium. In some embodiments, the composition can include about 15% to 45% indium. The composition can have a solidus temperature below about 315□F.

The present invention can also provide a solder composition having a mixture of elements including tin, indium, silver, bismuth and copper, and can include about 30% to 85% tin and about 13% to 65% indium.

In particular embodiments, the composition can include about 1% to 10% silver, about .25% to 6% bismuth, and about .25% to .75% copper. In some embodiments, the composition can include about 1% to 6% silver, about .25% to 4% bismuth, and about .25% to .75% copper. The composition can include about 50% to 83% tin, and about 13% to 45% indium. In some embodiments, the composition can include about 15% to 45% indium. In other embodiments, the composition can include about 66% to 85% tin, and about 13% to 26% indium. The composition can have a solidus temperature below about 315□F. In further embodiments, the composition can include about 70% to 80% tin, and about 15% to 26% indium. In one embodiment, the composition can include about 70% to 74% tin, about 18% to 26% indium, about 1% to 6% silver, about .25% to 4% bismuth, and about .25% to .75% copper. In another embodiment, the composition can include about 73% to 78% tin, about 17% to 22% indium, about 1% to 6% silver, about .25% to 4% bismuth, and about .25% to .75 % copper. In yet another embodiment, the composition can include about 78% to 85% tin, about 13% to 16% indium, about 1% to 6% silver, about .25% to 4% bismuth, and about .25% to .75% copper.

The present invention can also provide a solder composition including tin, indium and silver, and having more than about 60% tin and a solidus temperature below about 330□F.

In particular embodiments, the solidus temperature can be below about 315□F. The composition can further include bismuth, and some embodiments can further include copper.

The present invention can also provide a method of forming a solder composition including mixing tin, indium, silver, and bismuth together, and including about 30% to 85% tin, and about 15% to 65% indium.

The present invention can also provide a method of forming a composition including mixing tin, indium, silver, and bismuth together, and including about 30 % to 85% tin, about 13% to 65% indium, and about .25% to 4% bismuth.

The present invention can also provide a method of forming a solder composition including mixing tin, indium, silver, bismuth and copper together, and including about 30% to 85% tin, and about 13% to 65% indium.

The present invention can also provide a method of forming a solder composition including mixing tin, indium and silver together, including more than about 60% tin, and providing the composition with a solidus temperature below about 330□F.

The present invention can also provide a method of soldering including providing a solder composition having a mixture of elements including tin, indium, silver and bismuth, and including about 30% to 85% tin, and about 15 % to 65% indium. The solder composition is then melted with a soldering device.

### BRIEF DESCRIPTION OF THE DRAWINGS

The foregoing and other objects, features and advantages of the invention will be apparent from the following more particular description of particular embodiments of the invention, as illustrated in the accompanying drawings in which like reference characters refer to the same parts throughout the different views. The drawings are not necessarily to scale, emphasis instead being placed upon illustrating the principles of the invention.
FIG. 1 is a schematic drawing of an embodiment of an apparatus for forming a multilayer solder article.
FIG. 2 is a front schematic view of an embodiment of a rolling device or mill depicted in FIG. 1.
FIG. 3 is a front view of an embodiment of a guide for guiding material into the rolling mill.
FIG. 4 is a cross section of a clad band having a base substrate clad with a layer of a first or higher melting temperature solder.
FIG. 5 is a schematic drawing of an embodiment of a process and apparatus for forming the clad band of FIG. 4.
FIG. 6 is a cross section of an embodiment of a multilayer solder article including a base substrate having a multilayer solder with a layer of a first or higher melting temperature solder and a layer of a second or lower melting temperature solder covering the first solder.
FIG. 7 is a schematic drawing of an electrical connector having a multilayer solder prior to soldering to automotive glass.
FIG. 8 is a schematic drawing of the device of FIG. 7 after soldering to automotive glass.
FIG. 9 is an inside view of a rear window of an automobile including an electrically operated defroster.
FIG. 10 is a side view of an electrical connector soldered to an electrical contact on the rear window of FIG. 9, with the rear window, electrical contact and solder being shown in section.

### DETAILED DESCRIPTION

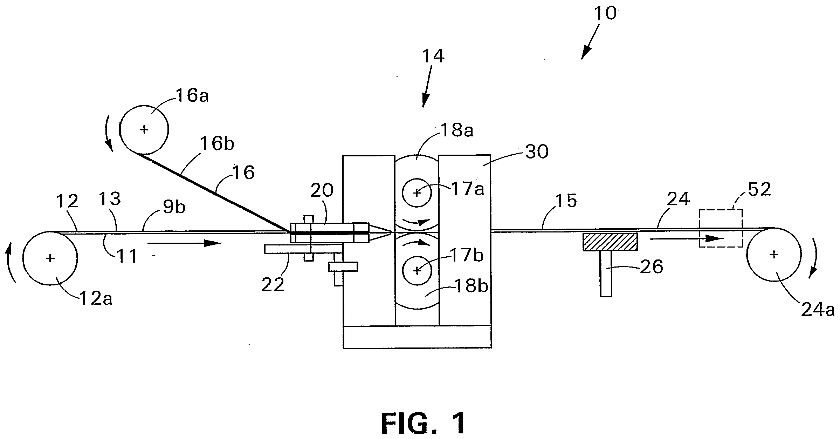

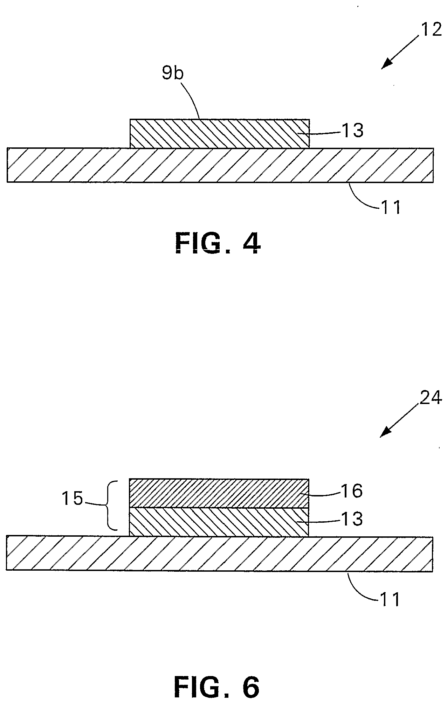

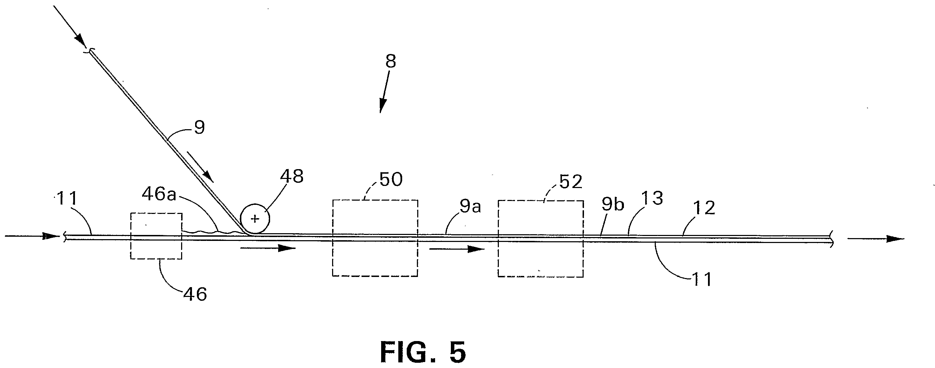

FIG. 1 depicts an embodiment of an apparatus 10 for forming a multilayer solder article 24 (FIG. 6). The multilayer solder article 24 can have a multilayer solder 15 which can include a first solder 13 and a second solder 16. When forming the multilayer solder article 24, a clad ribbon, strip, belt or band 12 (FIG. 4), having an electrically conductive base substrate 11 and a layer of a first solder 13 on one surface, can be pulled from a roll 12a at an unwind station. The first solder 13 can be a higher melting point or temperature solder. The base substrate 11 can be a ribbon, strip, belt or band of sheet metal suitable for forming electrical devices, such as electrical connectors, by stamping.

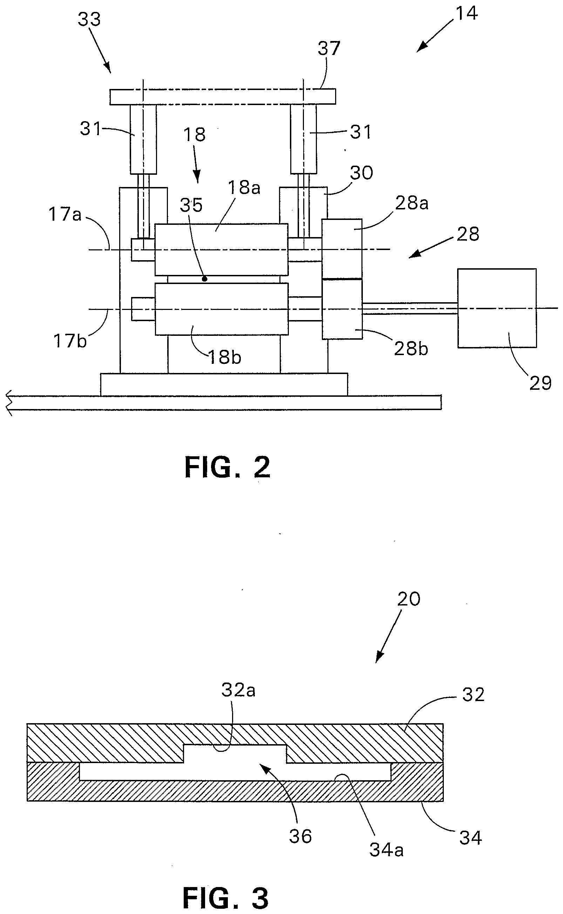

The clad band 12 can be moved through a guide 20 to align the clad band 12 with a rolling device or mill 14 (FIG. 2). A ribbon, strip, belt or band 16b of a second or lower melting point or temperature solder 16 can be pulled from a roll 16a at an unwind station for positioning on or over the higher melting temperature solder 13. The second solder 16 can be softer or more ductile than the first solder 13. The band 16b of the second solder 16 can be moved through the guide 20 (FIG. 3) for alignment with both the clad band 12 and the rolling mill 14. The guide 20 can align the band 16b of the second solder 16 relative to or with the first solder 13 and the base substrate 11.

The band 16b of the second solder 16 and the clad band 12 can be cold rolled together by rolling mill 14 between first or upper 18a, and second or lower 18b rollers of a roll system 18. Cold rolling can combine or bond the second solder 16 with the first solder 13 to form the multilayer solder article 24. A heating station 26 can be positioned after the rolling mill 14 for heating the multilayer solder article 24 to ensure a sufficient bond between the first solder 13 and the second solder 16, but without melting the solders 13 or 16. The heating station 26 can be a flame heater positioned under the base substrate 11 as shown, or in other embodiments, can be an oven, hot air gun, etc. The multilayer solder article 24 (FIG. 6) can then be wound up in a roll 24a at a windup station.

In particular embodiments, the guide 20 can be secured to the rolling mill 14 close to the rollers 18a/18b. The position of the guide 20 can be adjusted by an adjustment device 22 (FIG. 1). The guide 20 can include a first or upper portion 32 and a second or lower portion 34 which are shaped and fastened together to form a longitudinal passage 36 through the guide 20 (FIG. 3). The lower portion 34 can have a groove 34a which is sized to guide the base substrate 11 through the guide 20 and the upper portion 32 can have a groove 32a which is sized and positioned for guiding the band 16b of the second solder 16 in alignment with the first solder 13 on the base substrate 11. The guide 20 can commence the combining of the second solder 16 with the first solder 13 and the base substrate 11. The downstream end of the guide 20 can be contoured such as in a tapered or curved manner in order to be positioned closely between and adjacent to rolls 18a and 18b.

In one embodiment, the groove 34a can be about .01 inches wider and .004 inches higher than the width and thickness of the base substrate 11. In addition, the groove 32a can be about .025 inches wider than the width of the solder 13 on the base substrate 11 and about .010 inches higher than the combined height or thicknesses of the first solder 13 and the band 16b of the second solder 16.

Referring to FIGs. 1 and 2, the rolling mill 14 can include a frame 30 to which the rolls 18a and 18b are rotatably mounted about first or upper 17a, and second or lower 17b axes, respectively. A gear system 28 can be connected to the roller system 18 for causing the rolls 18a and 18b to rotate in unison. The gear system 28 can include a first or upper gear 28a that is secured to roll 18a along axis 17a, and a second or lower gear 28b that is secured to roll 18b along axis 17b. Gears 28a and 28b can be engaged or intermeshed with each other. The rolling mill 14 can be driven by a motor drive 29, or can be rotated by the movement of the clad band 12 and the second solder 16 passing between the rolls 18a and 18b. The space 35 between the rolls 18a and 18b can be adjusted by an adjustment fixture 33 to provide the desired amount of pressure on the clad band 12 and solder 16 during the rolling process in order to bond the second solder 16 to the first solder 13 by cold rolling. In some embodiments, the space 35 between rolls 18a and 18b can be set to reduce the initial combined height or thickness of the first solder 13 and the second solder 16 by about 30% to 50%. The adjustment fixture 33 can include a pair of cylinders 31, for example, hydraulic or pneumatic cylinders, for positioning roll 18a and axis 17a relative to roll 18b and axis 17b, and providing rolling pressure. The cylinders 31 can be secured to an adjustable plate 37, which can be adjusted, for example, with adjustment screws (not shown) to change the position of the cylinders 31.

The cold rolling by rolling mill 14 can be performed without requiring pretreatment of the mating surfaces of the first 13 and second 16 solders (for example, the removal of contaminants such as oxides, by chemical, energy or mechanical means). The thickness reduction and material deformation of the first 13 and second 16 solders during the cold rolling process can provide sufficient pressure, heat or material changes for bonding to occur between the layers of the first 13 and second 16 solders. In some embodiments, the heating station 26 can be omitted. In other embodiments, the base substrate 11 can be omitted so that the first 13 and second 16 solders are alone combined by the rolling mill 14 to form a multilayer solder article. The guide 20 can be modified to accommodate the omission of the base substrate 11.

The band 9 of the first solder 13 can initially be about .016 inches thick and the thickness of the first solder 13 can be reduced to about .005 to .010 inches thick by trimming, machining or skiving. Thickness reduction can also include cold rolling. The band 16b of the second solder 16 can initially be about .010 inches thick and the thickness of the second solder 16 can be reduced to about .005 to .008 inches thick by trimming and/or cold rolling. The total thickness of multilayer solder 15 can be about .013 to .015 inches thick. In some embodiments, the multilayer solder 15 can be about .007 to .040 inches thick. In other embodiments, solder 13 can be even thinner or omitted, and the layer of the second solder 16 can range between about .001 to .008 inches thick. Depending upon the application at hand, the thicknesses can be even higher or lower than those described above. The second solder 16 can be softer and more ductile than the first solder 13. In particular embodiments, the multilayer solder 15 can be formed of generally lead free compositions that are suitable for cold rolling by the rolling mill 14 of apparatus 10.

Referring to FIG. 4, the clad band 12 can be pre-formed prior to being processed by apparatus 10. This can be accomplished by embodiments of the apparatus 8 depicted in FIG. 5 where a moving band of the base substrate 11 can have flux 46a applied to a surface of the base substrate 11 at a flux station 46, such as by a brush, roller dispenser, etc. A ribbon, strip, belt or band 9 of the first or higher melting temperature solder 13 can be applied by a roller 48 over the flux 46a and against the base substrate 11. The band 9 of the first solder 13 can then be melted or reflowed at a heating station 50, such as by flames, oven, hot air gun, etc., to melt and bond the band 9 to the base substrate 11 as reflowed solder 9a. If desired, a skiving or trimming station 52 can be included for trimming the reflowed solder 9a and/or the base substrate 11 to result in clad band 12 with a trimmed layer 9b of the first or higher melting temperature solder 13 at desired dimensions. The desired dimensions can be thickness and/or width. The trimming can also be performed on a separate processing machine. The clad band 12 can be wound up in a roll 12a for processing on apparatus 10. In some embodiments, the clad band 12 can be fed directly into rolling mill 14 for combining with the band 16b of the second solder 16. Although flux 46a has been described for treating the surfaces to allow the first solder 13 to bond to the base substrate 11, other suitable treatments can be employed.

Referring to FIG. 6, the multilayer solder article 24 produced by apparatus 10 (FIG. 1) can have a multilayer solder 15 where the first or higher melting temperature solder 13 can be positioned or bonded against the base substrate 11 and the second or higher melting temperature solder 16 can be bonded over the first solder 13. The multilayer solder 15 can be a strip that is narrower than the base substrate 11 and can be located along a longitudinal axis of the base substrate 11, for example, the central longitudinal axis. As a result, only a portion of the base substrate 11 can be covered by the multilayer solder 15 so that side margins of the base substrate 11 are exposed. The base substrate 11 can be made of a material, such as sheet metal that is suitable for forming into electrical devices. In one embodiment, base substrate 11 can be made of copper, for example, C110 that is about .031 inches thick and about 1.812 inches wide. The base substrate 11 can be trimmed down to a width of about 1.56 inches. The multilayer solder 15 can be about .620 inches wide and centered on base substrate 11 with about .448 inch margins on each side. Depending upon the situation at hand, other materials such as steel can be employed, and the base substrate 11 and/or multilayer solder 15 can have other suitable dimensions.

In some embodiments, the width of the base substrate 11 can be trimmed before stamping begins. The base substrate 11 can be trimmed by a trimming station 52, on apparatus 8, apparatus 10, or on a separate processing machine. The multilayer solder 15 can also be trimmed to desired configurations and dimensions by trimming station 52 on apparatus 10, or on a separate processing machine. For example, the width and/or thickness of the multilayer solder 15 can be trimmed. In addition, the layer of the first solder 13 can be made narrower than the layer of the second solder 16 to reduce the possibility of the first solder 13 from contacting soldering surfaces. Alternatively, a second solder 16 that is wider than the first solder 13 can also be cold rolled over the first solder 13.

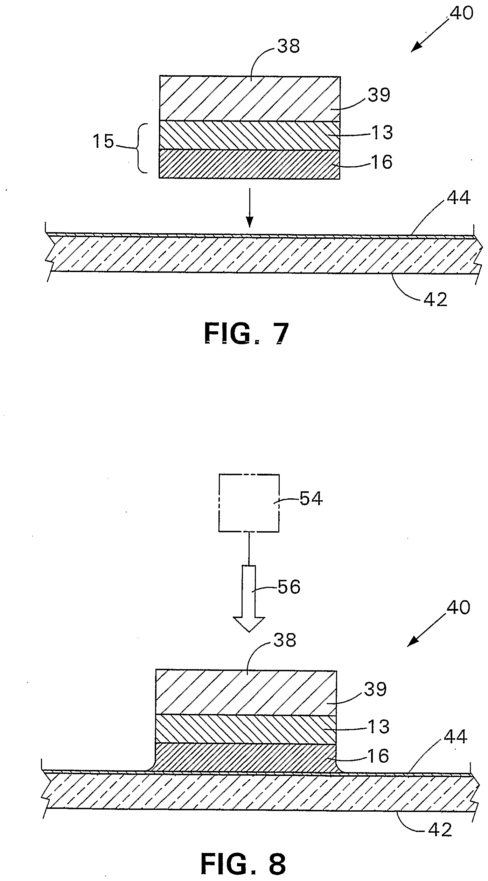

Referring to FIG. 7, the multilayer solder article 24 can be formed into solder clad electrical devices of various configurations, including an electrical connector 40, such as by stamping processes, by feeding the roll 24a into the appropriate processing machinery. The electrical connector 40 can include a connector portion 38 which is formed from the base substrate 11 into a desired configuration, for example, to engage a mating connector. The multilayer solder 15 can be located on the electrical connector 40 in a location suitable for soldering electrical connector 40 to a surface, such as on a base 39. The layer of the first or higher melting temperature solder 13 can be sandwiched between the base 39 of the connector portion 38 and the layer of the second or lower melting temperature solder 16.

For embodiments of the electrical connector 40 that are suitable for soldering to automotive glass 42, the first solder 13 can have a composition that is suitable for bonding to the material of connector portion 38, for example, copper, and the second solder 16 can have a composition that is suitable for bonding to a terminal pad 44 on the surface of automotive glass 42. The first or higher melting temperature solder 13 can be a tin (Sn) and silver (Ag) solder, for example, having about 70% or greater tin, by weight. For example, in one embodiment, solder 13 can be a tin and silver, solder having a composition of about 95% tin and about 5% silver, by weight (95Sn 5Ag). In other embodiments, solder 13 can have a variety of different amounts of tin, such as about 97Sn 3 Ag, 90Sn 10Ag, 80Sn 20Ag, etc. In addition, some of the silver can be replaced by other elements. Although the first solder 13 is suitable for being bonded to the connector portion 38, the first solder 13 might not be suitable for soldering to the automotive glass 42, and might cause cracking of the glass 42. It has been observed by the Applicant that high tin solders typically cause cracking of automotive glass.

On the other hand, the second or lower melting temperature solder 16 can have a lower tin (Sn) content and high indium (In) content to allow soldering to automotive glass 42 without cracking the glass 42. The second solder 16 can be positioned on the base 39 of connector portion 38 to contact the automotive glass 42 and also to prevent contact of the first solder 13 with the glass 42. The second solder 16 can have an indium (In), tin (Sn), silver (Ag) and copper (Cu) composition with at least about 40% indium, less than about 55% tin, and the balance being about 3% to 5% silver and .25% to .75% copper, by weight. Some embodiments of solder 16 can have at least about 50% indium and about 45% or less tin. For example, solder 16 can have a composition of more than 50% indium, a maximum of about 30% tin, about 3% to 5% silver and about .25% to .75% copper. In one embodiment, solder 16 can be about 65% indium, about 30% tin, about 4.5% silver and about .5% copper, by weight. The indium content can even be higher than 65%, thereby further reducing the percentage of tin. An example of a suitable solder composition for solder 16 is disclosed in U.S. Patent No. 6,253,988, issued July 3, 2001, the entire teachings of which are incorporated herein by reference. The multilayer solder article can be formed with the desired solder compositions, and then, if desired, formed into electrical devices or electrical connectors 40. Solder 13 and solder 16 can both include silver to prevent or reduce the scavenging of silver from the automobile glass 42.

Referring to FIGs.7 and 8, when soldering electrical device 40 to automotive glass 42, a soldering device 54 can apply a selected or programmed amount of heat 56 for soldering the electrical device 40 to the terminal pad 44 of the automotive glass 42. The soldering device 54 can be microprocessor controlled and the amount of required heat can be preselected or preprogrammed, for example in watt/sec. Such a soldering device is commercially available from Antaya Technologies Corporation, in Cranston, Rhode Island. The programmed amount of heat 56 can melt the second or lower melting temperature solder 16 for soldering the electrical device 40 to the glass 42 without substantially melting the first or higher melting temperature solder 13. Preferably, the first or higher melting temperature solder 13 does not melt at all, but slight melting is permitted, as long as there is not too much mixing of the two layers of solder 13 and 16. If the tin content next to the glass 42 increases too much by the migration of tin from the layer of the first solder 13 into the layer of the second solder 16, cracking of the glass 42 can occur.

In one embodiment, the multilayer solder article 24 and resulting electrical device or electrical connector 40 can have a first solder 13 having a composition of 95Sn 5Ag, and a second solder 16 having a composition of 65In 30Sn 4.5Ag .5Cu. The melting point or melting temperature (liquidus) of a 95Sn 5Ag first solder 13 is about 465° F (241° C), and the solidus is about 430° F (221° C). The melting point or melting temperature (liquidus) of a 65In 30Sn 4.5Ag .5Cu second solder 16 is about 250° F (121° C), and the solidus is about 245° F (118° C). As can be seen, the difference in melting temperatures between the 95Sn 5Ag first solder 13 and the 65In 30Sn 4.5Ag .5Cu second solder 16 can be about 215° F. Such a differential between the two melting temperatures can permit the second solder 16 to be melted without substantially melting the first solder 13. When solder 13 has a composition of 95Sn 5Ag and solder 16 has a composition of 65In 30Sn 4.5Ag .5Cu, about 500 to 650 watt/sec of heat 56 can be a suitable range for melting the second solder 16 but not the first solder 13. The amount of heat that is applied can differ depending upon the size and thickness of the connector portion 38 and the volume of solder 16. In other embodiments, about 650 to 750 watt/sec can be suitable.

By having the second solder 16 with a melting temperature below about 310° F, for example about 250° F, soldering the second solder 16 to the automotive glass 42 at such a low temperature can minimize thermal stress on the automotive glass 42. In addition, the extent of cooling that the second solder 16 experiences while cooling from the melting temperature to room temperature (for example down to about 70° F) can be as little as a 180° F temperature drop. Therefore, the amount of thermal shrinkage experienced by the second solder 16 can be kept to a minimum due to the small temperature drop, thereby minimizing the shrinkage differential between the second solder 16 and the automotive glass 42. Automotive glass 42 has a very low coefficient thermal expansion relative to solder 16, and does not shrink as much as solder 16 during cooling. Furthermore, by including a high indium content, the solder 16 can be ductile or soft enough to absorb thermal expansion differences between the solder 16 and the automotive glass 42 without cracking the glass 42. One or more of these factors can allow the second solder 16 to solder to automotive glass 42 without cracking the glass 42.

In other embodiments, the melting temperatures of the first 13 and second 16 solders can vary depending upon the situation at hand and the compositions chosen. The melting temperature of the first solder 13 can be lower than 465° F, for example, about 350° F, or can be higher, for example, above 500° F, and even as high as about 650° F. The melting temperature of the second solder can be below 250° F, for example, as low as 135° F, or can be higher than 310° F, for example 500° F to 550° F. The compositions chosen for the first 13 and second 16 solders should have at least about a 100° F difference in melting temperature to more easily enable the melting of the second solder 16 without substantially melting the first solder 13. It may be possible to have smaller differences in melting temperature depending upon the precision at which the heat 56 can be delivered and the compositions employed.

It has been found through further testing that additional embodiments of the second solder 16 can have a greater range of tin and indium and be compatible or suitable for soldering on automotive glass without cracking or spalling the glass. Additional embodiments of the second solder 16 can have a composition with 55% or more tin (Sn) and 40% or less indium (In). The composition of the second solder 16 can have less than 90% tin (Sn) and greater than 10% indium (In), which in comparison to a high tin solder such as 95 Sn 5 Ag, is lower tin and high indium. The balance can be about 1% to 10% silver (Ag) (often about 1% to 6%), and about .25% to .75% copper (Cu). Embodiments of the second solder 16 can have a melting temperature at about 360° F and below, and often about 320° F and below. In some embodiments, the melting temperature can be below about 315° F and in other embodiments, can be below about 310° F.

In one embodiment, the second solder 16 can be about 60% tin (Sn), about 35% indium (In), about 4.5% silver (Ag) and about .5% copper (Cu). The exact percentages can vary slightly due to normal variations in manufacturing, for example, about 59% to 61% Sn, about 34% to 36% In, about 4% to 5% Ag and about .4% to .6% Cu. The melting point or melting temperature (liquidus) can be about 300° F (149° C) and the solidus can be about 235° F (113° C). In another embodiment, the second solder 16 can be about 50% Sn, about 46% In, about 3.5% Ag and about .5% Cu. The exact percentages can vary slightly due to normal variations in manufacturing, for example, about 49% to 52% Sn, about 45% to 47% In, about 3% to 4% Ag and about .4% to .6% Cu. The melting point or melting temperature (liquidus) can be about 240° F (116° C) and the solidus can be about 235° F (113° C). These compositions of the second solder 16 can be used with a first solder 13 having 95 Sn 5 Ag, as well as other suitable compositions, including those previously described.

A common composition range of the additional embodiments of the second solder 16 can be at least about 50% tin, at least about 10% indium, 1% to 10% silver (often about 2% to 6%), and about .25% to .75% copper. In some situations, it is understood that further elements can also be included in the second solder 16 composition in addition to the tin, indium, silver and copper, typically, a relatively small percentage in comparison to the tin and indium.

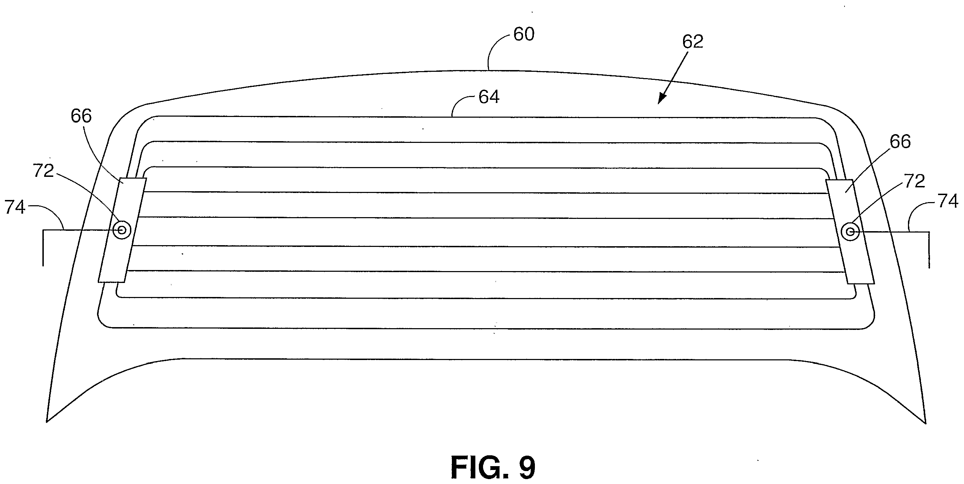

The present invention also provides another non-lead solder composition that can be alone suitable for soldering electrical components to automotive glass for electrically connecting to electrical devices within or on the glass, as well as suitable for use as the second solder 16 of a multilayer solder. Referring to FIG. 9, the rear automotive glass window 60 of an automobile is employed as an illustrative example for soldering electrical components to automotive glass. Automotive glass window 60 can include a window defroster 62 consisting of electrically resistive defrosting lines 64 embedded within or deposited on the inner surface of window 60. The defrosting lines 64 can be electrically connected to a pair of electrical contacts 66 located on the inner surface of the glass 60. The electrical contacts 66 can consist of a conductive coating deposited on the inner surface of the glass 60. Often, electrical contacts 66 are formed from silver.

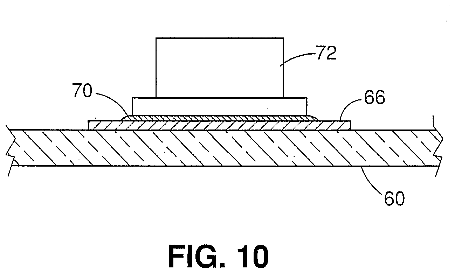

Referring to FIG. 10, the solder composition 70 can be employed to solder an electrical connector 72 to each electrical contact 66 on the glass 60. Power lines 74 can then be electrically connected to electrical connectors 72 to provide power to window defroster 62 (FIG. 9). Soldering of the electrical connectors 72 to the electrical contacts 66 on glass 60 with solder composition 70 can be conducted by resistance soldering. Alternatively, any conventional soldering apparatus can be employed to melt solder composition 70, for example, a soldering iron.

Solder composition 70 can include tin (Sn), indium (In), silver (Ag), and bismuth (Bi). Solder composition 70 can have a lower amount of tin than found in common high tin solder compositions. This can help prevent cracking and/or spalling of automotive glass 60 during soldering. Sufficient indium can provide solder composition 70 with a relatively low melting point or temperature (liquidus) as well as mechanical properties which can prevent cracking and/or spalling of automotive glass 60.

Although too much bismuth can make solder composition 70 brittle, the proper amount of bismuth in combination with the other elements can provide solder composition 70 with a sufficiently low solidus temperature that also can help prevent cracking and/or spalling of automotive glass 60, without making solder composition 70 too brittle. The bismuth can provide a paste range between the liquidus and solidus temperatures which can be as small as about 30° F and as large as about 140° F. A proper amount of bismuth can keep the solidus temperature below about 330° F, commonly below about 315° F. Some embodiments of the solder composition 70 can have a solidus temperature of about 310° F and less, for example, about 305° F and less. The silver in solder composition 70 can prevent solder composition 70 from scavenging silver from the electrical contact 66 into the solder composition 70. Finally, copper (Cu) can be included within solder composition 70 for improving wetting.

By providing the solder composition 70 with a relatively low melting temperature, thermal stress on the automotive glass 60 can be minimized. In addition, by providing the solder composition with a relatively low solidus temperature, the extent of cooling that the solder composition 70 experiences while cooling from the solidus temperature to room temperature can be minimized. Therefore, the amount of thermal shrinkage experienced by the solder composition 70 after solidification can be kept to a minimum due to a relatively small temperature drop, thereby minimizing the shrinkage differential and stresses between the solder composition 70 and the automotive glass 60. As previously mentioned, by including sufficient indium content, the solder composition 70 can be ductile or soft enough to absorb thermal expansion differences between the solder composition 70 and the automotive glass 60 without cracking and/or spalling the glass 60.

A common compositional range for solder composition 70 can be about 30% to 85% tin, about 13% to 65% indium (often about 15% to 65%), about 1% to 10% silver, and about .25% to 6% bismuth, by weight. Some embodiments can include about 50% to 85% tin (often about 50% to 83%), and about 13% to 45% indium (often about 15% to 45%). Additional embodiments can include about 66% to 85% tin (often about 66% to 83%), and about 13% to 26% indium (often about 15% to 26%). Particular embodiments can include about 70% to 80% tin, and about 15% to 26% indium. Further embodiments can include copper, for example .25% to .75%. In some embodiments there can be about 1% to 6% silver, about .25% to 4% bismuth and about .25% to .75% copper.

To make solder composition 70, ingots of indium, tin, silver, bismuth and copper can be melted and mixed together. Alternatively, the elements can be melted from powder form or a desired combination of ingots, powder and/or existing solder compositions. The mixed solder composition 70 can then be cast, extruded or rolled into a shape suitable for soldering, for example, a ribbon, wire, etc. If desired, the solder composition 70 can be formed into a paste.

In one embodiment, solder composition 70 can include about 51% tin, about 42% indium, about 3.5% silver, about 3% bismuth and about .5% copper. The actual percentages can vary slightly due to normal variations in manufacturing, for example about 49% to 52% tin, about 40% to 44% indium, about 1% to 6% silver, about .25% to 4% bismuth, and about .25% to .75% copper. The melting point or temperature (liquidus) can be about 253° F (123° C) and the solidus can be about 223° F (106° C), resulting in a paste range of about 30° F.

In another embodiment, the solder composition 70 can include about 60% to 63% tin, about 28% to 33% indium, about 1% to 6% silver, about .25% to 4% bismuth, and about .25% to .75% copper. For example, solder composition 70 can include about 62% tin, about 30% indium, about 5% silver, about 2.5% bismuth, and about .5% copper. The melting point or temperature (liquidus) can be about 311° F (155° C) and the solidus can be about 226° F (108° C), resulting in a paste range of about 85° F. In another example, the solder composition 70 can include about 62% tin, about 32% indium, about 4.5% silver, about 1% bismuth and about .5% copper. The melting point or temperature (liquidus) can be about 336° F (169° C) and the solidus can be about 199° F (93° C), resulting in a paste range of about 137° F. The coefficient of thermal expansion (CTE) can be about 11x10⁻⁶/° F (19.7x10⁻⁶/° C).

In still another embodiment, the solder composition 70 can include about 68% tin, about 24% indium, about 6% silver, about 1.5% bismuth and about .5% copper. The actual percentages can vary slightly, for example, about 66% to 69% tin, about 22% to 26% indium, about 1% to 7% silver, about .25% to 4% bismuth, and about .25% to .75% copper. The melting point or temperature (liquidus) can be about 360° F (182° C) and the solidus can be about 235° F (113° C), resulting in a paste range of about 125° F. The coefficient of thermal expansion (CTE) can be about 10.9x10⁻⁶/° F (19.6x10⁻⁶/° C).

In another embodiment, the solder composition 70 can include about 70% to 74% tin, about 18% to 26% indium, about 1% to 6% silver, about .25% to 4% bismuth, and about .25% to .75% copper. For example, the solder composition 70 can include about 72% tin, about 19% indium, about 5% silver, about 3.5% bismuth and about .5% copper. The melting point or temperature (liquidus) can be about 370° F (188° C) and the solidus can be about 273° F (134° C), resulting in a paste range of about 97° F. The coefficient of thermal expansion (CTE) can be about 10.8x10⁻⁶/° F (19.5x10⁻⁶/° C). In another example, the solder composition 70 can include about 72% tin, about 24% indium, about 2% silver, about 1.5 % bismuth and about .5% copper. The melting point or temperature (liquidus) can be in the range of about 379° F (193° C) to 385° F (196° C) with an average of about 382° F (194° C), and the solidus can be in the range of about 221° F (105° C) to 233° F (112° C) with an average of about 227° F (108° C). This can result in an average paste range of about 155° F. The coefficient of thermal expansion (CTE) can have an average of about 12.5x10⁻⁶/° F (22.5x10⁻⁶/° C).

In another embodiment, the solder composition 70 can include about 73% to 78% tin, about 17% to 22% indium, about 1% to 6% silver, about .25% to 4% bismuth, and about .25% to .75% copper. For example, solder composition 70 can include about 75% tin, about 19% indium, about 3.5% silver, about 2% bismuth and about .5% copper. The melting point or temperature (liquidus) can be about 381° F (194° C) and the solidus can be about 284° F (140° C), resulting in a paste range of about 97° F. The coefficient of thermal expansion (CTE) can be about 10x10⁻⁶/° F (18x10⁻⁶/° C) and the density can be about 7.4 g/cm³. In another example, the solder composition 70 can include about 75% tin, about 20.5% indium, about 2.5% silver, about 1.5% bismuth and about .5% copper. The melting point or temperature (liquidus) can be about 372° F (189° C) and the solidus can be about 278° F (137° C), resulting in a paste range of about 94° F. In another example, the solder composition 70 can include about 77% tin, about 18% indium, about 3% silver, about 1.5% bismuth and about .5% copper. The melting point or temperature (liquidus) can be about 379° F (193° C) and the solidus can be about 297° F (147° C), resulting in a paste range of about 82° F. The coefficient of thermal expansion (CTE) can be about 8.8x10⁻⁶/° F (15.9x10⁻⁶/° C).

In another embodiment, the solder composition 70 can include about 78% to 85% tin, about 13% to 16% indium, about 1% to 6% silver, about .25% to 4% bismuth, and about .25% to .75% copper. For example, solder composition 70 can include about 80% tin, about 15% indium, about 3.5% silver, about 1% bismuth and about .5% copper. The melting point or temperature (liquidus) can be about 390° F (199° C) and the solidus can be about 304° F (151° C), resulting in a paste range of about 86° F. The coefficient of thermal expansion (CTE) can be about 8.5x10⁻⁶/° F (15.3x10⁻⁶/° C). In another example, the solder composition 70 can also include about 83% tin, about 13% indium, about 2.5% silver, about 1% bismuth, and about .5% copper. The melting point or temperature (liquidus) can be about 399° F (204° C) and the solidus can be about 305° F (152° C), resulting in a paste range of about 94° F. The coefficient of thermal expansion (CTE) can be about 7.6x10⁻⁶/° F (13.7x10⁻⁶/° C). In some situations, the indium content can be about 12% to 16%.

While this invention has been particularly shown and described with references to particular embodiments thereof, it will be understood by those skilled in the art that various changes in form and details may be made therein without departing from the scope of the invention encompassed by the appended claims.

For example, the apparatus 10 can be employed for bonding more than two layers of solder together, resulting in a multilayer solder article, electrical device or electrical connector having more than two layers of solder. In addition, the mating surfaces of the solders 13/16 can be pretreated for bonding purposes. In embodiments where the multilayer solder article does not have a base substrate 11, the multilayer solder article can be subsequently bonded or positioned relative to products requiring soldering. A rolling process can also be used to bond the first solder 13 to the base substrate 11. Although multilayer solder article 24 has been shown and described to be formed employing cold rolling processes, alternatively, article 24 and/or electrical device or connector 40 can be formed employing other processes, for example, deposition or reflow processes. Ultrasonic or resistance welding devices can also be employed for bonding desired layers of material together. For example, the solders can be applied to the base substrate 11 by welding processes. Although particular solder compositions have been described for the first 13 and second 16 solders, alternatively other solder compositions can be employed for various applications, including compositions containing lead. Embodiments of the apparatuses and resulting articles, electrical devices, electrical connectors shown and described, can also be for non automotive applications. The first solder layer 13 can be used to compensate for uneven surfaces and can be omitted when very flat surfaces are encountered.

Although particular solder compositions have been described for soldering to automotive glass, alternatively, the solder compositions can be employed for soldering to other types of glass such as used in buildings or any other material where a low melting or solidus point solder is desirable. In addition, although particular solidus and liquidus temperatures have been given, such temperatures can vary depending upon the elements present and the percentages of those elements. Furthermore, in some embodiments, additional elements may be added to the solder compositions or substituted for elements in the solder compositions, for example, antimony, zinc, nickel, iron, gallium, germanium, cadmium, titanium, tellurium, platinum, etc.

## Claims

1. A solder composition consisting of a mixture of elements consisting of tin, indium, silver, bismuth and, optionally, copper, and including 50% to 83% tin, 15% to 45% indium, and in case the solder composition includes copper, it includes 1% to 10% silver, 0.25% to 6% bismuth and 0.25% to 0.75% copper, by weight, wherein the composition has a solidus temperature below 157° C (315° F).

2. The solder composition of Claim 1, consisting of a mixture of elements consisting of tin, indium, silver, bismuth and copper, wherein the composition includes 66% to 83% tin and 15% to 26% indium, optionally with respect to silver, bismuth and copper.

3. The solder composition of Claim 1, consisting of a mixture consisting of: 66% to 83% tin, 15% to 26% indium, 1% to 6% silver, 0.25% to 4% bismuth, and 0.25% to 0.75% copper.

4. The solder composition of Claim 1, consisting of a mixture consisting of: 70% to 74% tin, 18% to 26% indium, 1% to 6% silver, 0.25% to 4% bismuth and 0.25% to 0.75% copper.

5. The solder composition of Claim 1, consisting of a mixture consisting of: 73% to 78% tin, 17% to 22% indium, 1% to 6% silver, 0.25% to 4% bismuth and 0.25% to 0.75% copper.

6. The solder composition of Claim 1, in which:
the composition comprises 60% to 63% tin, 28% to 33% indium, 1% to 6% silver, 0.25% to 4% bismuth, and 0.25% to 0.75% copper

7. The solder composition of Claim 1, in which:
the composition comprises 66% to 69% tin, 22% to 26% indium, 1% to 7% silver, 0.25% to 4% bismuth, and 0.25% to 0.75% copper.

8. A method of soldering, comprising:
providing a solder composition according to any one of Claims 1-7; and
melting the solder composition with a soldering device.

## Patentansprüche

1. Lötzusammensetzung, die aus einer Mischung von Elementen besteht, die aus Zinn, Indium, Silber, Bismut und, optional, Kupfer besteht, und 50 - 83 % Zinn, 15 - 45 % Indium umfasst, und in dem Fall, in dem die Lötzusammensetzung Kupfer umfasst, sie 1 - 10 % Silber, 0,25 - 6 % Bismut und 0,25 - 0,75% Kupfer umfasst, in Gewichtsprozent, wobei die Zusammensetzung eine Solidustemperatur aufweist, die unter 157° C (315° F) liegt.

2. Lötzusammensetzung gemäß Anspruch 1, die aus einer Mischung von Elementen besteht, die aus Zinn, Indium, Silber, Bismut und Kupfer besteht, wobei die Zusammensetzung 66 - 83 % Zinn und 15 - 26 % Indium umfasst, optional hinsichtlich Silber, Bismut und Kupfer.

3. Lötzusammensetzung gemäß Anspruch 1, die aus einer Mischung besteht, die besteht aus:
66 - 83 % Zinn, 15 - 26 % Indium, 1 - 6 % Silber, 0,25 - 4 % Bismut und 0,25 - 0,75 % Kupfer.

4. Lötzusammensetzung gemäß Anspruch 1, die aus einer Mischung besteht, die besteht aus:
70 - 74 % Zinn, 18 - 26 % Indium, 1 - 6 % Silber, 0,25 - 4 % Bismut und 0,25 - 0,75 % Kupfer.

5. Lötzusammensetzung gemäß Anspruch 1, die aus einer Mischung besteht, die besteht aus:
73 - 78 % Zinn, 17 - 22 % Indium, 1 - 6 % Silber, 0,25 - 4 % Bismut und 0,25 - 0,75 % Kupfer.

6. Lötzusammensetzung gemäß Anspruch 1, wobei:
die Zusammensetzung 60 - 63 % Zinn, 28 - 33 % Indium, 1 - 6 % Silber, 0,25 - 4 % Bismut und 0,25 - 0,75 % Kupfer umfasst.

7. Lötzusammensetzung gemäß Anspruch 1, wobei:
die Zusammensetzung 66 - 69 % Zinn, 22 - 26 % Indium, 1 - 7 % Silber, 0,25 - 4 % Bismut und 0,25 - 0,75 % Kupfer umfasst.

8. Lötverfahren, das umfasst:
Bereitstellen einer Lötzusammensetzung gemäß einem der Ansprüche 1-7; und
Schmelzen der Lötzusammensetzung mit einer Lötvorrichtung.

## Revendications

1. Composition de brasure consistant en un mélange d'éléments composé d'étain, d'indium, d'argent, de bismuth et, éventuellement, de cuivre, et comprenant 50 à 83 % d'étain, 15 à 45 % d'indium, et dans le cas où la composition de brasure comprend du cuivre, elle comprend 1 à 10 % d'argent, 0,25 à 6 % de bismuth et 0,25 à 0,75 % de cuivre, en poids, dans laquelle la composition a une température de solidus inférieure à 157° C (315° F).

2. Composition de brasure selon la revendication 1, consistant en un mélange d'éléments composé d'étain, d'indium, d'argent, de bismuth et de cuivre, dans laquelle la composition comprend 66 à 83 % d'étain et 15 à 26 % d'indium, éventuellement par rapport à l'argent, au bismuth et au cuivre.

3. Composition de brasure selon la revendication 1, consistant en un mélange composé de :
66 à 83 % d'étain, 15 à 26 % d'indium, 1 à 6 % d'argent, 0,25 à 4 % de bismuth et 0,25 à 0,75 % de cuivre.

4. Composition de brasure selon la revendication 1, consistant en un mélange composé de :
70 à 74 % d'étain, 18 à 26 % d'indium, 1 à 6 % d'argent, 0,25 à 4 % de bismuth et 0,25 à 0,75 % de cuivre.

5. Composition de brasure selon la revendication 1, consistant en un mélange composé de :
73 à 78 % d'étain, 17 à 22 % d'indium, 1 à 6 % d'argent, 0,25 à 4 % de bismuth et 0,25 à 0,75 % de cuivre.

6. Composition de brasure selon la revendication 1, dans laquelle :
la composition comprend 60 à 63 % d'étain, 28 à 33 % d'indium, 1 à 6 % d'argent, 0,25 à 4 % de bismuth et 0,25 à 0,75 % de cuivre.

7. Composition de brasure selon la revendication 1, dans laquelle :
la composition comprend 66 à 69 % d'étain, 22 à 26 % d'indium, 1 à 7 % d'argent, 0,25 à 4 % de bismuth et 0,25 à 0,75 % de cuivre.

8. Procédé de brasure comprenant :
le fait de fournir une composition de brasure selon l'une des revendications 1 à 7 ; et
la fusion de la composition de brasure avec un dispositif de brasage.
